# EUROPÄISCHE PATENTSCHRIFT

(11) **EP 1 827 933 B1**
(45) Veröffentlichungstag und Bekanntmachung des Hinweises auf die Patenterteilung: **08.10.2008**
(21) Anmeldenummer: 04819681.0
(22) Anmeldetag: 18.11.2004
(51) Int. Cl.: B60T 8/36, B60T 8/48

(54) **VERFAHREN ZUR KALIBRIERUNG VON ANALOG REGELNDEN ELEKTRISCH ANSTEUERBAREN HYDRAULISCHEN VENTILEN**
METHOD FOR CALIBRATING ANALOGUE REGULATING, ELECTRICALLY CONTROLLABLE HYDRAULIC VALVES
PROCEDE POUR ETALONNER DES SOUPAPES HYDRAULIQUES, A COMMANDE ELECTRIQUE, ASSURANT UNE REGULATION ANALOGIQUE

(30) Priorität: 08.12.2003 DE 10357592
(43) Veröffentlichungstag der Anmeldung: 05.09.2007
(73) Patentinhaber: Continental Teves AG & Co. oHG, 60488 Frankfurt (DE)
(72) Erfinder: SCHMIDT, Robert, 56477 Rennerod (DE); LOOS, Mirco, 66583 Elversberg (DE); NEU, Andreas, 76773 Kuhardt (DE); REIS, Andreas, 60439 Frankfurt (DE)
(86) Internationale Anmeldenummer: PCT/EP2004/053001
(87) Internationale Veröffentlichungsnummer: WO 2005/054028

(56) Entgegenhaltungen:
- EP-B- 0 813 481
- WO-A-01/98124
- WO-A-02/33425
- WO-A-03/068574
- DE-A1- 10 221 456

## Beschreibung

Die Erfindung betrifft ein Verfahren gemäß Oberbegriff von Anspruch 1 sowie eine Vorrichtung gemäß Anspruch 7.

Es ist bekannt, in ABS-Steuergeräten für Kraftfahrzeugbremssysteme, aber auch in sogenannten Fahrdynamikreglern mit zusätzlichen Funktionen wie ESP etc., analog regelnde elektrisch ansteuerbare hydraulischen Ventile zur Regelung des Hydraulikdrucks einzusetzen.

Bei neueren Generationen von Hydraulikregelvorrichtungen werden sogenannte Analog/Digital-Ventile eingesetzt. Ein Analog/Digitalventil ist ein Schaltventil, welches so betrieben wird, dass es analoge Regeleigenschaften besitzt. Dieses Ventil ist in der Weise konstruiert, dass es sowohl analog als auch digital betrieben werden kann.

Ein Verfahren zur Erkennung des Schaltpunktes des Ventils, insbesondere zur Bestimmung der Druckverhältnisse aus dem Stromverlauf des Ventilansteuerstromes, geht aus der EP 0 813 481 B1 hervor.

Im Prinzip lässt sich der durch das Ventil aufgebaute Druckgradient über den Spulenstrom einstellen. Allerdings ist hierzu bekanntlich eine aufwendige Kalibrierung notwendig. Hierzu werden, wie z.B. in der WO 01/98124 A1 beschrieben, Kennlinien für die Ventile ermittelt und in Abhängigkeit vom gewünschten Druckgradienten mit Hilfe der Kennlinien berechnete Sollströme eingestellt. Der Volumenstrom Q hängt demzufolge über die Kennlinie f vom Differenzstrom Δp und vom Strom I ab.

Aus der DE 102 214 56 A1 ist ein Kalibrierverfahren für analogisierte Einlass- und Trennventile gemäß dem Oberbegriff von Anspruch 1 bekannt. Das in dieser Druckschrift beschriebene Kalibrierverfahren kommt nicht ohne die Nutzung einer sogenannten Prüfstange aus, welches daher zum Niederdrücken des Bremspedals eine entsprechend aufwendig gestaltete Prüfvorrichtung voraussetzt.

Eine Erstellung von individuellen Kalibrierdaten oder Kennlinien für jedes Ventil während der Fertigung, zum Beispiel durch manuelles Einsetzen des Bremsensteuergerätes in eine Vorrichtung mit Prüfstange, ist allerdings aufwendig und nachteilhaft. Weiterhin ist es nachteilhaft, wenn zum Beispiel die Elektronik einer diese Ventile enthaltenden elektrohydraulischen Vorrichtung zum Zwecke der Wartung zu einem späteren Zeitpunkt ausgetauscht werden muss. In diesem Fall gehen die dort gespeicherten Kalibrierdaten in der Regel verloren. Es besteht daher die Aufgabe, ein Verfahren anzugeben, mit dem sich entsprechend geeignete Kalibrierdaten oder Kennlinien auf einfachere Weise erstellen lassen.

Diese Aufgabe wird durch das Verfahren gemäß Anspruch 1 gelöst.

Die Kalibrierung nach der Erfindung erfolgt durch die Vorrichtung automatisch unter Nutzung der hydraulischen Energie der fremdkraftgesteuerten Druckaufbauvorrichtung (zum Beispiel eine von einem Motor angesteuerte Kolbenpumpe). Die Kalibrierung wird bevorzugt erst nach der Produktion des Ventils oder der elektrohydraulischen Vorrichtung in dem Objekt, in dem das Ventil bzw. die elektrohydraulische Vorrichtung eingebaut ist, durchgeführt. Die Kalibrierung kann also zum Beispiel erst nach dem Einbau des Steuergeräts in ein Kraftfahrzeug erfolgen.

Dieses Verfahren ist erheblich kostengünstiger, als eine Erstellung von Kalibrierdaten am Band, da eine Übertragung der Kalibrierdaten in die mit dem Ventil verbundene elektronische Steuerung nicht mehr erforderlich ist.

Vorzugsweise umfasst die elektrohydraulische Regeleinrichtung, in der die Ventile eingebaut sind, mehrere hydraulische Druckregelkreise, die getrennt mittels Einlass- und Auslassventile ansteuerbar sind. Besonders bevorzugt ist jedem Kreis ein Bremszylinder zugeordnet. Im Beispiel einer Bremsvorrichtung ist jeder Druckregelkreis einem Kraftfahrzeugrad zugeordnet.

Die elektrohydraulische Regeleinrichtung umfasst eingangsseitig vorzugsweise einen Drucksensor zum Beispiel im Bereich des Hauptzylinders (Thz).

Mehrere oder alle Kreise sind vorzugsweise mit weiteren "Kreisdruck-sensoren" ausgestattet, welche eine individuelle Druckmessung in jedem Hydraulikkreis gestatten.

Bei den erfindungsgemäß zu kalibrierenden Magnetventilen, wobei es sich insbesondere um stromlos offene Einlassventile eines Bremsenssteuergerätes handelt, lässt sich einem bestimmten Differenzdruck ein im wesentlichen zugeordneter Spulenstrom bestimmen.

Das Verfahren kann vorzugsweise auch gleichzeitig zur Überprüfung der ordnungsgemäßen Funktion der Vorrichtung verwendet werden.

Zweckmäßigerweise wird die beschriebene Kalibrierroutine nach dem Einbau des Bremsensteuergeräts einmalig bei der ersten Inbetriebnahme oder bei jedem Zündungslauf vorgenommen.

Vorzugsweise befindet sich ein Kraftfahrzeug, in dem die Bremsvorrichtung insbesondere eingebaut ist, während der Durchführung der Kalibrierroutine im Stillstand.

Bevorzugt wird während des Verfahrens überwacht, ob beim Befüllen des Druckspeichers eine bestimmte vorgegebene Maximalzeit nicht überschritten wird.

Es ist weiterhin bevorzugt, dass überwacht wird, ob die ermittelte Kennlinie oder die ermittelten Kalibrierdaten innerhalb eines vorgegebenen Gültigkeitsbereich liegen.

Weitere bevorzugte Ausführungsformen ergeben sich aus den Unteransprüchen und der nachfolgenden Beschreibung der Figuren.

Nachfolgend wird die Erfindung an Hand eines Beispiels näher erläutert.

Es zeigen
- Fig. 1: eine schematische Darstellung einer Bremsvorrichtung mit analog ansteuerbaren Ventilen und
- Fig. 2: ein Diagramm zur Darstellung der Druckverläufe und des Ventilstroms.

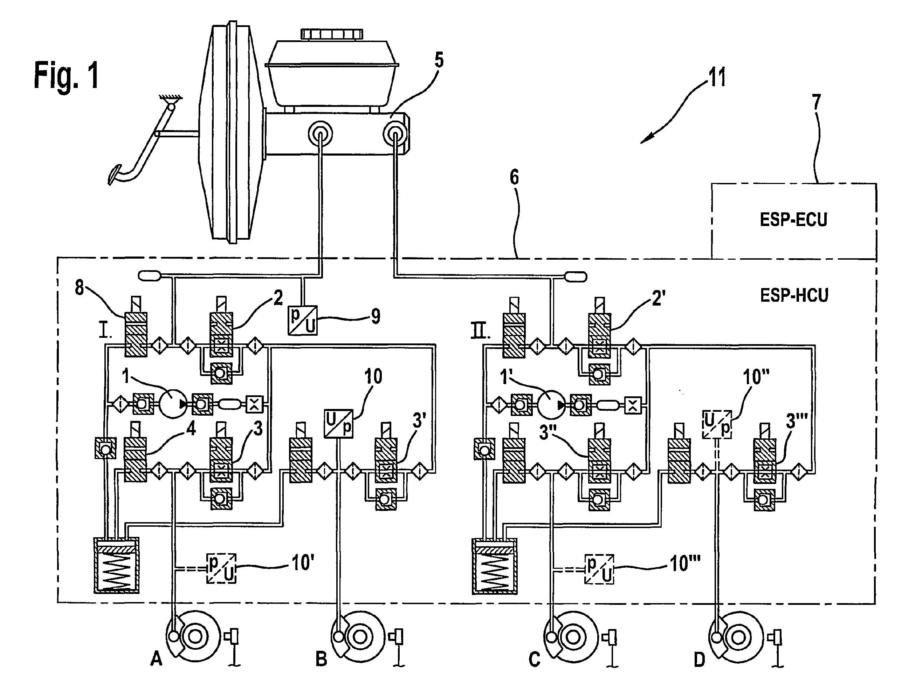

In Fig. 1 ist Tandemhauptzylinder 5 mit Ventilblock 6 eines elektronischen Kraftfahrzeugbremssystems verbunden. Elektronikeinheit 7 umfasst ein Mikrocontrollersystem, mit dem die im Ventilblock enthaltenen Aktuatoren und Sensoren elektronisch gesteuert bzw. ausgemessen werden. Ventilblock 6 umfasst zwei Bremskreise I und II. Jeder Bremskreis umfasst zwei Raddruckkreise mit jeweils einem Einlass- 3 und einem Auslassventil 4. 2 bezeichnet ein stromlos offenes Trennventil und 8 ein stromlos geschlossenes elektronisches Umschaltventil. In der zu Hauptzylinder 5 führenden Hydraulikleitung befindet sich ein Eingangsdrucksensor 9. In den Raddruckkreisen befinden sich ein oder mehrere Drucksensoren 10, 10' , 10", 10'''. Pumpe 1 wird zum selbstständigen Druckaufbau verwendet, zum Beispiel im ASR- oder ESP-Fall.

Zur Kalibrierung wird zunächst im ersten Schritt Ventil 2 geschlossen und Ventil 8 geöffnet. Pumpe 1 wird aktiviert. Nach Druckaufbau von etwa 5 bar in Druckkreis A (Kalibrierkreis) wird Ventil 3 geschlossen. Ventil 3' in Kreis B bleibt weiterhin offen, bis ein Druck von etwa 180 bar in Kreis B erreicht wird. Der Druck in Kreis A ist größer Null, damit während der eigentlichen Kalibrierung unerwünschte Effekte (z.B. Kavitation) nicht auftreten.

Im nächsten Schritt wird die Pumpe ausgeschaltet und Ventil 8 geschlossen. Der Druck in Kreis B ist dann zunächst ähnlich einem Druckspeicher eingeschlossen.

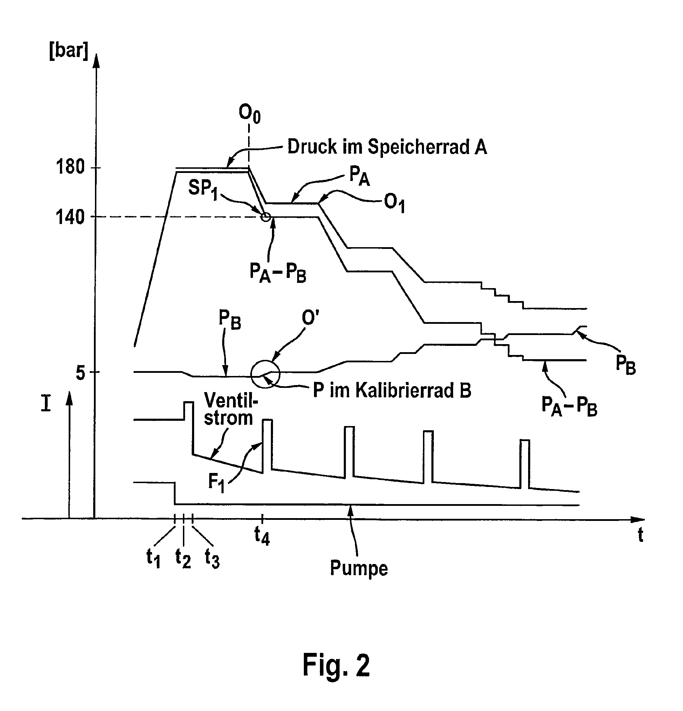

Mit Bezug auf Fig. 2 wird nun das weitere Verfahren erläutert. Zum Zeitpunkt t1 wird die Pumpe ausgeschaltet. Der Druck im "Speicherrad" B beträgt etwa 180 bar. Zum Zeitpunkt t2 wird der Ventilstrom des zu kalibrierenden Ventils 3 am "Kalibrierrad" A so weit erhöht, dass das Ventil fest geschlossen ist. Darauffolgend (ab t3 bis t4) wird der Strom langsam abgesenkt. Währenddessen, an Punkt "O₀" öffnet das Ventil, so dass der Druck im Speicherrad A sinkt. Entsprechend steigt der Druck in Bereich "0'" im Kalibrierrad B an. Wenn ein Differenzdruck (PB - PA) von 140 bar erreicht ist, wird Stützstelle SP₁ erfasst und gespeichert. An Punkt SP1 wird das Ventil 3 durch eine steile Stromerhöhung (Flanke F1) wieder geschlossen. Die Druckänderung wird hierdurch gestoppt. Im Anschluss daran wird durch Stromabsenkung Punkt O₁ gesucht, bei dem das Ventil gerade wieder eine Druckänderung herbeiführt. Dies kann z.B. durch Überwachung einer Unterschreitung eines vorgegebenen Schwellenwertes festgestellt werden. Der Öffnungsstrom an Punkt O₁ wird mit dem Druck an Stützstelle SP₁ verknüpft gespeichert. Danach wird das Verfahren zur Messung weiterer Stützpunkte (SP₂, O₂), (SP₃, O₃), ..., (SPₙ, Oₙ) in entsprechender Weise fortgeführt. Man erhält eine Kalibrierkurve DeltaP (I) für das Ventil 3.

Das Verfahren wird dann für die übrigen Raddruckkreise B bis D wiederholt, wobei jeweils ein benachbarter Raddruckkreis als Speicherkreis verwendet wird. Auf diese Weise können für alle Einlassventile Kalibrierkurven gemessen werden.

Das Verfahren kann zum Beispiel zusätzlich abgesichert werden dadurch, dass geprüft wird, ob
- alle Drucksensoren plausible Signale liefern,
- das Fahrzeug sich zur Kalibrierzeit im Stillstand befindet,
- eine maximale Zeit für den Druckaufbau nicht überschritten wird,
- die gefundene Kennlinie innerhalb gewisser Schranken liegt (z.B. Maxkennlinie, Minkennlinie, Mindest und Maximal-Steigung).

Es ist außerdem zweckmäßig, die Kalibrierdaten bzw. die Daten der Kennlinien durch Prüfsummen abzusichern.

## Patentansprüche

1. Verfahren zur Ventilkalibrierung eines analog regelnden, elektrisch ansteuerbaren Hydraulikventils (2, 2',3, 3', 3", 3''') in einer Vorrichtung, insbesondere elektrohydraulische Druckregeleinrichtung (11), mit zumindest einer Einrichtung zum fremdkraftgespeisten Druckaufbau (1, 1') und mit Drucksensoren (9, 10, 10', 10", 10'''), wobei die Vorrichtung mehrere Drucksteuerkreise (A, B, C, D) sowie insbesondere mehrere Bremskreise (I., II.) umfasst und wobei zumindest einige Drucksteuerkreise mit einem diesem Kreis zugeordneten Drucksensor sowie Einlass- (3) und Auslassventilen (4) verbunden sind, **dadurch gekennzeichnet, dass**
- mehrere Kalibrierroutinen zum Erzeugen und Speichern von automatisch ermittelten Kalibrierdaten durchgeführt werden und
- während oder vor jeder Kalibrierroutine durch die fremdkraftgespeiste Druckaufbaueinrichtung (1, 1') Druck in mindestens einem Drucksteuerkreis (A, B, C, D) erzeugt wird und unter Nutzung des aufgebauten Drucks Kalibrierdaten für eines oder mehrere analog regelnde Hydraulikventile aufgenommen werden.

2. Verfahren nach Anspruch 1, **dadurch gekennzeichnet, dass** ein erster Drucksteuerkreis (A) als Druckspeicher genutzt wird und die Aufnahme der Kalibrierdaten eines Ventils in mindestens einem weiteren Drucksteuerkreis (B), welcher vom ersten Kreis verschieden ist, vorgenommen wird.

3. Verfahren nach Anspruch 2, **dadurch gekennzeichnet, dass** auch im mindestens einen weiteren Kreis mit dem zu kalibrierenden Ventil (3') mittels der fremdkraftgespeisten Druckaufbaueinrichtung Druck aufgebaut wird, wobei dieser Druck geringer ist, als der Druck im ersten Kreis.

4. Verfahren nach mindestens einem der vorhergehenden Ansprüche, **dadurch gekennzeichnet, dass** die Kalibrierdaten den Differenzdruck oder daraus ableitbare Größen umfassen und der Differenzdruck, bei dem der Öffnungsstrom des Ventils gemessen werden soll, zunächst durch Öffnen des gleichen Ventils eingestellt wird, wobei Hydraulikvolumen aus dem ersten Kreis in den weiteren Kreis abfließt, und dann das geöffnete Ventil wieder vollständig geschlossen wird.

5. Verfahren nach mindestens einem der vorhergehenden Ansprüche, **dadurch gekennzeichnet, dass** das Ventil bei einem vorher nach Anspruch 4 eingestellten und gemessenen Differenzdruck durch Variation des Ventilstroms langsam geöffnet wird und der Öffnungsstrom gemessen wird, wenn der Druck im ersten bzw. weiteren Kreis oder der Differenzdruck sich um ein festes vorgegebenes Maß verändert hat.

6. Verfahren nach mindestens einem der vorhergehenden Ansprüche, **dadurch gekennzeichnet, dass** zur Ermittlung der Kalibrierdaten mehrere Messwerte und/oder mehrere Messroutinen zum Zwecke der Genauigkeitsverbesserung oder Redundanz berücksichtigt werden.

7. Druckregelvorrichtung für elektronische Bremssysteme oder Fahrdynamikregelungssysteme, **dadurch gekennzeichnet, dass** diese einen Mikrorechner umfasst, welche das Verfahren gemäß mindestens einem der Ansprüche 1 bis 6 ausführt.

## Claims

1. Method for the valve calibration of an analogue-regulated, electrically actuable hydraulic valve (2, 2', 3, 3', 3", 3''') in an apparatus, in particular electrohydraulic pressure regulating device (11), having at least one device for externally-powered pressure generation (1, 1') and having pressure sensors (9, 10, 10', 10", 10'''), with the device comprising a plurality of pressure control circuits (A, B, C, D) and in particular a plurality of brake circuits (I., II.), and with at least some of the pressure control circuits being connected to a pressure sensor, which is assigned to said circuit, and to inlet (3) and outlet valves (4), **characterized in that**
- a plurality of calibration routines for generating and storing automatically determined calibration data are carried out, and
- during or before every calibration routine, pressure is generated in at least one pressure control circuit (A, B, C, D) by means of the externally-powered pressure generation device (1, 1'), and calibration data for one or more analogue-regulated hydraulic valves are recorded utilizing the generated pressure.

2. Method according to Claim 1, **characterized in that** a first pressure control circuit (A) is utilized as a pressure accumulator, and the recording of the calibration data of a valve is carried out in at least one further pressure control circuit (B) which differs from the first circuit.

3. Method according to Claim 2, **characterized in that** pressure is also built up in the at least one further circuit, having the valve (3') to be calibrated, by means of the externally-powered pressure generation device, with said pressure being lower than the pressure in the first circuit.

4. Method according to at least one of the preceding claims, **characterized in that** the calibration data comprise the differential pressure, or variables which can be derived therefrom, and the differential pressure at which the opening current of the valve is to be measured is initially set by opening the same valve, with hydraulic volume flowing out of the first circuit into the further circuit, and the open valve then being completely closed again.

5. Method according to at least one of the preceding claims, **characterized in that,** at a differential pressure previously set and measured according to Claim 4, the valve is slowly opened by varying the valve current, and the opening current is measured once the pressure in the first or further circuit or the differential pressure has varied by a fixedly predefined measure.

6. Method according to at least one of the preceding claims, **characterized in that,** to determine the calibration data, a plurality of measurement values and/or a plurality of measurement routines are taken into consideration for the purposes of improving accuracy or for the purposes of redundancy.

7. Pressure regulating device for electronic brake systems or driving dynamics regulating systems, **characterized in that** said pressure regulating device comprises a microcomputer which carries out the method according to at least one of Claims 1 to 6.

## Revendications

1. Procédé pour calibrer une vanne hydraulique (2, 2', 3, 3', 3", 3''') de régulation analogique à commande électrique dans un dispositif, notamment un dispositif de régulation de pression électro-hydraulique (11), comprenant au moins un dispositif de mise sous pression (1, 1') alimenté par une force externe et comprenant des capteurs de pression (9, 10, 10', 10", 10'''), le dispositif comprenant plusieurs circuits de commande de pression (A, B, C, D) et notamment plusieurs circuits de freinage (I., II.) et au moins certains circuits de commande de pression étant reliés avec un capteur de pression associé avec ce circuit ainsi que des vannes d'entrée (3) et des vannes de sortie (4), **caractérisé en ce que**
- plusieurs routines de calibrage étant exécutées pour générer et enregistrer des données de calibrage déterminées automatiquement et
- une pression étant générée dans au moins un circuit de commande de pression (A, B, C, D) par le dispositif de mise sous pression (1, 1') alimenté par une force externe pendant ou avant chaque routine de calibrage et les données de calibrage pour une ou plusieurs vannes hydrauliques de régulation analogique étant collectées en utilisant la pression établie.

2. Procédé selon la revendication 1, **caractérisé en ce qu'**un premier circuit de commande de pression (A) est utilisé comme accumulateur de pression et la collecte des données de calibrage d'une vanne est effectuée dans au moins un circuit de commande de pression (B) supplémentaire qui est différent du premier circuit.

3. Procédé selon la revendication 2, **caractérisé en ce qu'**une pression est également établie dans au moins un circuit supplémentaire avec la vanne à calibrer (3') au moyen du dispositif de mise sous pression alimenté par une force externe, cette pression étant inférieure à la pression dans le premier circuit.

4. Procédé selon au moins l'une des revendications précédentes, **caractérisé en ce que** les données de calibrage comprennent la pression différentielle ou des grandeurs pouvant en être déduites et la pression différentielle à laquelle il faut mesurer le courant d'ouverture de la vanne est tout d'abord réglée en ouvrant la même vanne, un volume hydraulique s'écoulant du premier circuit dans le circuit supplémentaire et la vanne ouverte étant ensuite de nouveau complètement fermée.

5. Procédé selon au moins l'une des revendications précédentes, **caractérisé en ce qu'**en présence d'une pression différentielle réglée et mesurée préalablement selon la revendication 4, la vanne est ouverte lentement en faisant varier le courant de vanne et le courant d'ouverture est mesuré lorsque la pression dans le premier circuit ou le circuit supplémentaire ou encore la pression différentielle a varié d'une valeur fixe prédéfinie.

6. Procédé selon au moins l'une des revendications précédentes, **caractérisé en ce que** plusieurs valeurs mesurées et/ou plusieurs routines de mesure sont prises en compte pour déterminer les données de calibrage en vue d'améliorer la précision ou dans un but de redondance.

7. Dispositif de régulation de pression pour systèmes de freinage électroniques ou systèmes de régulation de la dynamique de conduite, **caractérisé en ce que** celui-ci comprend un microcalculateur qui met en oeuvre le procédé selon au moins l'une des revendications 1 à 6.
